# EUROPEAN PATENT SPECIFICATION

(11) **EP 1 995 095 B1**
(45) Date of publication and mention of the grant of the patent: **13.07.2011**
(21) Application number: 08155122.8
(22) Date of filing: 24.04.2008
(51) Int. Cl.: B60H 1/32

(54) **Control method for a variable displacement refrigerant compressor in a high-efficiency AC System**
Steuerverfahren für einen Verdichter mit variabler Verdrängung in einer leistungsoptimierten Klimaanlage
Procédé de contrôle pour compresseur de réfrigérant à déplacement variable dans un système de climatisation de haute efficacité

(30) Priority: 22.05.2007 US 805469
(43) Date of publication of application: 26.11.2008
(73) Proprietor: Delphi Technologies, Inc., Troy, Michigan 48007 (US)
(72) Inventor: Kadle, Prasad, Williamsville, NY 14221 (US); Zima, Mark J., Clarence Center, NY 14032 (US)
(74) Representative: Denton, Michael John

(56) References cited:
- EP-A- 1 308 327
- EP-A- 1 489 370
- FR-A- 2 864 854

## Description

### TECHNICAL FIELD

The present invention relates to a motor vehicle air conditioning system in which the capacity of a refrigerant compressor is controlled for high efficiency, and more particularly to a capacity control method for a variable displacement refrigerant compressor in such an air conditioning system.

### BACKGROUND OF THE INVENTION

Vehicle fuel efficiency studies have shown that a traditional air conditioning system with a fixed displacement compressor cycled on and off in the usual fashion can account for the consumption of nearly twenty-five gallons of gasoline per vehicle annually. As described in the U.S. Patent No. 6,293,116 to Forrest et al., however, air conditioning efficiency can be significantly improved by regulating the compressor capacity in a way that eliminates over-dehumidification and minimizes series re-heating of conditioned air. Whereas compressor capacity is traditionally regulated so as maximize cooling by the evaporator without ice formation on the evaporator fins, the efficiency gains described by Forrest et al. are achieved by regulating the compressor capacity to provide a somewhat elevated evaporator outlet air temperature (or refrigerant pressure) based on user cooling and humidity requirements.

Simply applying the principles of Forrest et al. to a system that cycles a fixed displacement compressor can result in a savings of about six gallons of gasoline per vehicle annually, similar to the savings that can be realized with a pneumatically controlled variable displacement compressor. However, the savings can be most dramatically increased -- to nearly thirteen gallons of gasoline per vehicle annually -- by replacing the fixed displacement compressor with an electronically controlled variable displacement compressor, which is the approach preferred by Forrest et al. Nevertheless, using an electronically controlled variable displacement compressor usually results in higher overall system cost because of the modulating control valve and the required control electronics. Accordingly, what is needed is a way of achieving the fuel efficiency obtainable with an electronically controlled system, but at a lower cost.

Another example of a method of operation of an air conditioning system according to the prior art is disclosed in EP1308327.

### SUMMARY OF THE INVENTION

The present invention provides an improved control methodology for achieving an efficient compressor capacity control with a pneumatically-controlled variable displacement compressor and a compressor clutch that is selectively cycled on and off to minimize series re-heating of conditioned air. Conditioned air is discharged after passing through an evaporator core, and a target value for the evaporator outlet air temperature is determined based on the desired air discharge temperature. The compressor clutch is cycled off when the evaporator outlet air temperature falls below the target value by at least a calibrated amount, and is thereafter cycled on again when the evaporator outlet air temperature rises above the target value. The target value is preferably biased to prevent compressor operation when the desired air discharge temperature exceeds outside air temperature by at least a calibrated amount and to prevent the relative humidity in the air-conditioned space from rising above a desired level.

### BRIEF DESCRIPTION OF THE DRAWINGS

FIG. 1 is a diagram of an air conditioning system controlled according to the present invention, including a pneumatically-controlled variable displacement refrigerant compressor with an electrically activated clutch, and a microprocessor based controller.

FIG. 2 is a flow diagram of a control method carried out by the controller of FIG. 1 according to this invention.

### DESCRIPTION OF THE PREFERRED EMBODIMENT

The present invention recognizes that the fuel efficiency benefits described in the aforementioned U.S. Patent No. 6,293,116 to Forrest et al. can be achieved at a reduced system cost by combining a pneumatically-controlled variable displacement compressor (such as shown and described in the U.S. Patent No. 4,428,718 to Skinner, for example) with a compressor clutch cycle control that comes into play when series re-heating of the conditioned air is achieve the desired air discharge temperature. The system cost is reduced because a pneumatically-controlled variable displacement compressor is less expensive to produce than an electronically controlled variable displacement compressor, and the control electronics required to carry out the clutch cycling control are simpler and less expensive than with traditional electronically controlled displacement. Ordinarily, of course, a pneumatically-controlled variable displacement compressor is not cycled on and off during activation of the air conditioning system, but we have found that by doing so to minimize series re-heating, the highest efficiency gains obtainable by practicing the capacity control method described by Forrest et al. can be very nearly achieved at a significantly lower system cost. It is estimated that a system based on the present invention will result in a fuel savings of approximately 11.5 gallons of gasoline per vehicle annually, compared to a system using a traditionally controlled fixed displacement compressor.

The control method of this invention is illustrated principally in the context of a motor vehicle climate control system that automatically regulates heating, ventilating and air conditioning (HVAC) parameters such as air discharge temperature, air discharge location (mode), and blower speed. However, it should be understood that the control can also be implemented in a so-called manual system in which the user manually controls the air discharge temperature and mode and the blower speed. Also, the control can be implemented in a non-vehicular air conditioning system if desired.

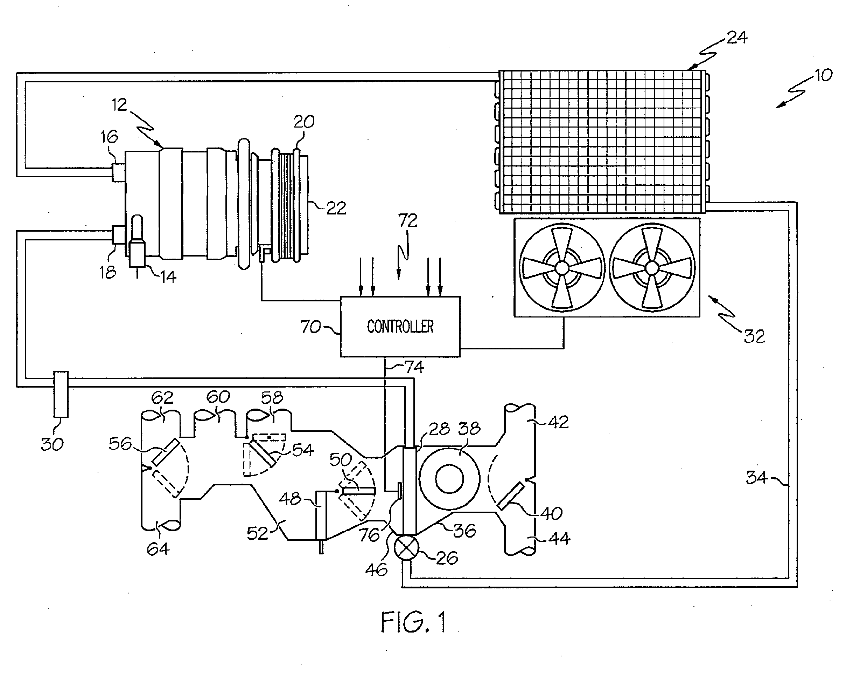

Referring FIG. 1, the reference numeral 10 generally designates an automatic climate control system for a motor vehicle. The system 10 includes a pneumatically-controlled variable displacement refrigerant compressor 12 such as shown and described in the aforementioned U.S. Patent No. 4,428,718 to Skinner, incorporated by reference herein. The compressor drive shaft is coupled to a drive pulley 20 via an electrically activated clutch 22, and a drive belt (not shown) couples the drive pulley 20 to a rotary drive source such as an engine accessory drive shaft so that compressor 12 can be turned on and off by respectively engaging and disengaging the clutch 22. The system 10 further includes a condenser 24, an orifice tube 26, an evaporator 28, and an accumulator/dehydrator 30 arranged in order between the discharge and suction ports 16 and 18 of compressor 12. The cooling fans 32 are electrically activated to provide supplemental airflow for removing heat from high-pressure refrigerant in condenser 24. The orifice tube 26 allows the cooled high-pressure refrigerant in line 34 to expand in isenthalpic fashion before passing through the evaporator 28. The accumulator/ dehydrator 30 separates low-pressure gaseous and liquid refrigerant, directs gaseous refrigerant to the compressor suction port 18, and stores excess refrigerant that is not in circulation. In an alternative system configuration, the orifice tube 26 is replaced with a thermostatic expansion valve (TXV); in this case, the accumulator/ dehydrator 30 is omitted, and a receiver/drier (R/D) is inserted in line 34 upstream of the TXV to ensure that subcooled liquid refrigerant is available at the TXV inlet.

The evaporator 28 is formed as an array of finned refrigerant-conducting tubes, and an air intake duct 36 disposed on one side of evaporator 28 houses a motor driven ventilation blower 38 for forcing air past the evaporator tubes. The duct 36 is divided upstream of the blower 38, and an inlet air control door 40 is adjustable as shown to control inlet air mixing. Depending on the position of air control door 40, outside air may enter blower 38 through duct leg 42, and cabin air may enter blower 38 through duct leg 44.

An air outlet duct 46 disposed on the downstream side of evaporator 24 houses a heater core 48 formed as an array of finned tubes through which flows engine coolant. The heater core 48 effectively divides the outlet duct 46, and a re-heat door 50 next to heater core 48 is adjustable as shown to apportion the airflow through and around heater core 48. The heated and un-heated air portions are mixed in a plenum 52 downstream of re-heat door 50, and two discharge air control doors 54 and 56 are adjustable as shown to direct the mixed air through one or more outlets, including a defrost outlet 58, a heater outlet 60, and driver and passenger panel outlets 62 and 64.

As described in detail in the aforementioned U.S. Patent No. 4,428,718 to Skinner, the compressor 12 is equipped with a pneumatically activated control valve 14 that adjusts the compressor displacement, and therefore its pumping capacity, in response to both the discharge (outlet) pressure at discharge port 16 and the suction (inlet) pressure at suction port 18. In general, the control valve 14 adjusts the compressor capacity to full displacement upon activation of compressor clutch 22, and thereafter reduces the displacement when the suction pressure indicates that the evaporator temperature is approaching a value (such as 4°C) just sufficient to prevent condensate from freezing on the fins of evaporator 28. As explained below, however, the control of the present invention overrides the capacity control of control valve 14 under specified conditions to reduce the effective compressor capacity by cycling the compressor clutch 22 on and off.

Referring again to FIG. 1, the reference numeral 70 designates a microprocessor-based controller for carrying out compressor capacity control of the present invention, as well as the traditional automatic climate control functions. Accordingly, the controller 70 regulates the operation of the compressor clutch 22, the cooling fans 32, the blower 38, and the various air control doors 40, 50, 54 and 56. The control is carried out in response to various system-related and vehicle-related inputs which are generally designated by the reference numeral 72. A system-related input especially pertinent to the control of the present invention is the evaporator outlet air temperature (EOAT) on line 74, as measured by a thermistor 76 disposed just downstream of the evaporator 28.

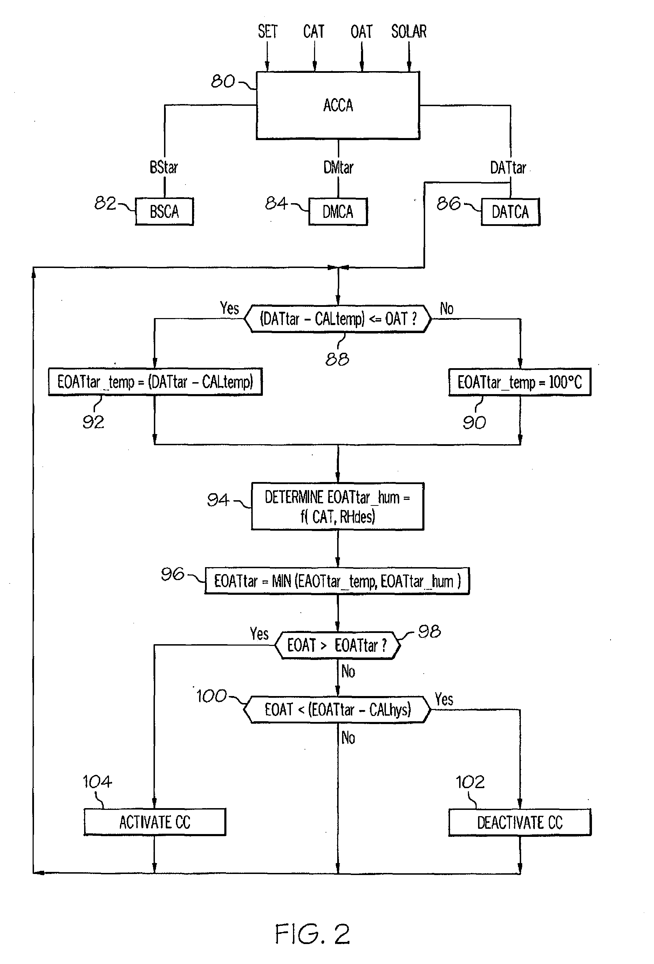

FIG. 2 is a diagram illustrating a control carried out by the controller 70 of FIG. 1 according to the present invention. The reference numeral 80 designates a conventional automatic climate control algorithm (ACCA) that determines target values for the blower speed, and the air discharge temperature and mode based on various inputs including the user set temperature (SET), the cabin air temperature (CAT), the outside air temperature (OAT), and a measure of solar loading (SOLAR). The target blower speed (BStar) is supplied to a blower speed control algorithm (BSCA) 82 that activates the electric motor of blower 38; the target discharge mode (DMtar) is supplied to a discharge mode control algorithm (DMCA) 84 that activates the discharge air control doors 54 and 56; and the target discharge air temperature (DATtar) is supplied to a discharge air temperature control algorithm (DATCA) 86 that activates the re-heat air control door 50. The control algorithms 82 and 84 usually involve simple open-loop control strategies, while the control algorithm 86 frequently involves a closed-loop control strategy in which re-heat air control door 50 is adjusted based on the deviation of the actual (measured) discharge air temperature from the target value DATtar.

Blocks 88-104 describe a control according to the present invention for cycling the compressor clutch 22 on and off (effectively overriding the compressor capacity control of pneumatic control valve 14) under certain operating conditions for improved system efficiency. The control is based on the measured evaporator outlet air temperature EOAT and the target discharge air temperature DATtar, and activates cycling of the compressor clutch 22 when EOAT is lower than required to satisfy DATtar. In a traditional system, the controller 70 maintains activation of compressor clutch 22 so long as the outside air temperature is above a minimum value, and the discharge air temperature control algorithm DATCA 86 satisfies the target value DATtar by positioning re-heat air control door 50 so that some or all of the air exiting evaporator 28 passes through the heater core 48. But when the compressor clutch 22 is cycled on and off according to the present invention, the discharge air temperature will more nearly match DATtar, allowing the discharge air temperature control algorithm DATCA 86 to satisfy DATtar with little or no series re-heating of the air exiting evaporator 28.

When the described control is implemented on a manual air conditioning system, the target value DATtar can be a temperature that is based on the position of a user-manipulated temperature control lever. In other words, the temperature control lever only provides a desired discharge air temperature, and a control algorithm such as the discharge air temperature control algorithm (DATCA) 86 is provided for adjusting the re-heat air control door 50 as required to satisfy the desired temperature.

Blocks 88-92 determine a temperature-based target (BOATtar_temp) for the evaporator outlet air temperature. Block 88 compares the outside air temperature OAT with a difference (DATtar - CALtemp) that represents the evaporator outlet air temperature required to satisfy DATtar. Accordingly, the term CALtemp is a calibrated value that represents the typical rise in air temperature (2°C, for example) between the outlet of evaporator 28 and the air outlets 58-64. If (DATtar - CALtemp) is higher than OAT, DATtar can be achieved with compressor 12 turned off, and block 90 sets the EOATtar_temp to an artificially high value such as 100°C. If (DATtar - CALtemp) less than or equal to OAT, at least some compressor operation will be required to achieve DATtar, and block 92 sets the EOATtar_temp to the difference (DATtar - CALtemp).

Block 94 determines a humidity-based target (EOATtar_hum) for the evaporator outlet air temperature. As explained in the aforementioned U.S. Patent No. 6,293,116 to Forrest et al., the evaporator outlet air temperature required to prevent the relative humidity in the cabin from rising above a desired level can be achieved by calculation or table look-up as a function of the measured cabin air temperature CAT (or set temperature SET) and the desired relative humidity RHdes.

Block 96 sets the evaporator outlet air temperature target EOATtar equal to the lesser of EOATtar_temp and EOATtar_hum, as indicated by the MIN function. Under most conditions, EOATtar_temp will be less than EOATtar_hum, and EOATtar will be set to a temperature designed to achieve DATtar. However, in cases where additional compressor capacity is required to prevent the cabin air from becoming too humid for occupant comfort, EOATtar_hum will be less than EOATtar_temp; in this case, EOATtar will be set to a temperature somewhat lower than required to achieve DATtar, and the discharge air temperature control algorithm DATCA 86 will adjust re-heat air control door 50 for series re-heating of the air exiting evaporator 28. The humidity-based target EOATtar_hum also comes into play when the outside air temperature OAT is less than the difference (DATtar - CALtemp), and block 90 sets the EOATtar_temp to 100°C.

Blocks 98-104 control activation of the compressor clutch 22 based on the target value EAOTtar determined at block 96. Block 98 compares the measured value EOAT with EOATtar, while block 100 compares EOAT with the difference (EOATtar - CALhys), where CALhys is a calibrated temperature delta that provides cycling hysteresis. The compressor clutch 22 will be activated initially, and blocks 100 and 102 deactivate clutch 22 for capacity control if EOAT falls below the difference (EOATtar - CALhys). Turning off the compressor 12 will allow EOAT to rise toward the inlet air temperature, and blocks 98 and 104 re-activate compressor clutch 22 when EOAT rises above EOATtar. In practice, CALhys is calibrated high enough to avoid rapid cycling of the compressor 12, but low enough to prevent noticeable temperature swings in the cabin.

In summary, the control method of the present invention provides a novel approach for achieving highly efficient climate control with a climate control system built around a low-cost pneumatically controlled variable displacement compressor. While the present invention has been described with respect to the illustrated embodiment, it is recognized that numerous modifications and variations in addition to those mentioned herein will occur to those skilled in the art. Accordingly, it is intended that the invention not be limited to the disclosed embodiment, but that it have the full scope permitted by the language of the following claims.

## Claims

1. A method of operation for an air conditioning system (10) including a variable displacement refrigerant compressor (12) having a clutch (22) that is selectively activated and deactivated for turning the compressor (12) on and off, and an evaporator (28) that conditions inlet air for discharge into a conditioned space, **characterized in that** the method comprises the steps of:
using a pneumatic control valve (14) for adjusting a pumping capacity of the compressor (12) in relation to its suction pressure in order to reduce the compressor displacement when the suction pressure indicates that the evaporator temperature is approaching a value just sufficient to prevent condensate from freezing on the fins of the evaporator (28);
determining a target temperature for air exiting the evaporator (88-96);
determining an actual temperature of air exiting the evaporator (76); and
overriding the compressor capacity control of pneumatic control valve (14) when the actual temperature falls below the target temperature by at least a calibrated amount (100-102) by deactivating the clutch (22) to turn off the compressor (12) and then activating the clutch (22) to turn on the compressor (12) when the actual temperature rises above the target temperature (98, 104).

2. The method of claim 1, including the steps of:
determining a desired temperature of the air discharged into the conditioned space (80); and
determining the target temperature based on the desired temperature (88-92).

3. The method of claim 1, including the steps of:
determining a desired temperature of the air discharged into the conditioned space (80); and
reducing the desired temperature by a calibrated amount to form the target temperature (92).

4. The method of claim 1, including the steps of:
determining a first target temperature based on a desired temperature of the air discharged into the conditioned space (88-92);
determining a second target temperature based on a temperature and desired relative humidity of air in the conditioned space (94); and
setting the target temperature for air exiting the evaporator (28) according to the lower of the first and second target temperatures (96).

5. The method of claim 4, including the step of:
setting the first target temperature to a predetermined value when a temperature of the inlet air is lower than the target temperature for air exiting the evaporator (28) by at least a calibrated amount (90).

6. The method of any of claims 1 to 5, where the air conditioning system (10) is an automatic climate control system, including a climate control algorithm (80) that develops said desired air discharge temperature and a discharge air temperature control algorithm (86) that regulates the amount of air re-heated by the heater core (48) to satisfy the desired air discharge temperature.

7. The method of any of claims 1 to 5, where the air conditioning system (10) is a manual air conditioning system in which the desired air discharge temperature is a user selected parameter, and the system (10) includes a discharge air temperature control (86) that regulates the amount of air re-heated by the heater core (48) to satisfy the desired air discharge temperature.

## Patentansprüche

1. Betriebsverfahren für ein Klimatisierungssystem (10) mit einem Kühlmittelkompressor mit variabler Verdrängung (12) mit einer Kupplung (22), die selektiv aktiviert und deaktiviert wird zum An- und Abschalten des Kompressors (12), und einem Evaporator (28), der Einlassluft aufbereitet zur Abgabe in einen klimatisierten Raum, **dadurch gekennzeichnet, dass** das Verfahren die Schritte aufweist:
Verwenden eines pneumatischen Steuerventils (14) zum Anpassen einer Pumpkapazität des Kompressors (12) in Relation zu seinem Saugdruck, um die Verdrängung des Kompressors zu reduzieren, wenn der Saugdruck anzeigt, dass sich die Evaporator-Temperatur einem Wert annähert, der gerade ausreichend ist, um zu verhindern, dass Kondensat an den Lamellen des Evaporators (28) anfriert;
Bestimmen einer Solltemperatur für Luft, die den Evaporator verlässt (88-96);
Bestimmen einer tatsächlichen Temperatur von Luft, die den Evaporator verlässt (76); und
Aufheben der Kompressorkapazitätssteuerung des pneumatischen Steuerventils (14), wenn die tatsächliche Temperatur um zumindest eine kalibrierte Größe unter die Solltemperatur fällt (100-102) durch Deaktivieren der Kupplung (22), um den Kompressor (12) abzuschalten, und dann Aktivieren der Kupplung (22), um den Kompressor (12) anzuschalten, wenn die tatsächliche Temperatur über die Solltemperatur steigt (98, 104).

2. Verfahren gemäß Anspruch 1, das die Schritte umfasst:
Bestimmen einer gewünschten Temperatur der Luft, die in den klimatisierten Raum abgegeben wird (80); und
Bestimmen der Solltemperatur basierend auf der gewünschten Temperatur (88-92).

3. Verfahren gemäß Anspruch 1, das die Schritte umfasst:
Bestimmen einer gewünschten Temperatur der Luft, die in den klimatisierten Raum abgegeben wird (80); und
Reduzieren der gewünschten Temperatur um eine kalibrierte Größe, um die Solltemperatur zu bilden (92).

4. Verfahren gemäß Anspruch 1, das die Schritte umfasst:
Bestimmen einer ersten Solltemperatur basierend auf einer gewünschten Temperatur der Luft, die in den klimatisierten Raum abgegeben wird (88-92);
Bestimmen einer zweiten Solltemperatur basierend auf einer Temperatur und einer gewünschten relativen Luftfeuchte von Luft in dem klimatisierten Raum (94); und
Setzen der Solltemperatur für Luft, die den Evaporator (28) verlässt, gemäß der niedrigeren der ersten und zweiten Solltemperaturen (96).

5. Verfahren gemäß Anspruch 4, das den Schritt umfasst:
Setzen der ersten Solltemperatur auf einen vorgegebenen Wert, wenn eine Temperatur der Einlassluft niedriger ist als die Solltemperatur für Luft, die den Evaporator (28) verlässt, um zumindest eine kalibrierte Größe (90).

6. Verfahren gemäß einem der Ansprüche 1 bis 5, wobei das Klimatisierungssystem (10) ein automatisches Klimaregelungssystem ist, das einen Klimaregelungsalgorithmus (80), der die gewünschte Luftabgabetemperatur entwickelt, und einen Abgabelufttemperaturregelungsalgorithmus (86) umfasst, der die Menge von Luft reguliert, die durch den Heizkörper (48) wieder erwärmt wird, um die gewünschte Luftabgabetemperatur zu erreichen.

7. Verfahren gemäß einem der Ansprüche 1 bis 5, wobei das Klimatisierungssystem (10) ein manuelles Klimatisierungssystem ist, in dem die gewünschte Luftabgabetemperatur ein von einem Benutzer ausgewählter Parameter ist, und wobei das System (10) eine Abgabelufttemperatursteuerung (86) umfasst, die die Menge von Luft reguliert, die durch den Heizkörper (48) wieder erwärmt wird, um die gewünschte Luftabgabetemperatur zu erreichen.

## Revendications

1. Procédé de fonctionnement pour un système de conditionnement d'air (10) incluant une pompe de réfrigérant à déplacement variable (12) ayant un embrayage (22) qui est sélectivement activé et désactivé pour mettre en marche le compresseur (12) et l'arrêter, et un évaporateur (28) qui conditionne l'air entrant pour son refoulement dans un espace conditionné, **caractérisé en ce que** le procédé comprend les étapes consistant à :
utiliser une valve de commande pneumatique (14) pour ajuster une capacité de pompage du compresseur (12) en relation à sa pression de succion afin de réduire le déplacement du compresseur quand la pression de succion indique que la température de l'évaporateur s'approche d'une valeur juste suffisante pour empêcher au condensat de se congeler sur les ailettes de l'évaporateur (28) ;
déterminer une température cible pour l'air sortant de l'évaporateur (88-96) ;
déterminer une température actuelle de l'air sortant de l'évaporateur (76) ; et
supplanter la commande de capacité du compresseur par la valve de commande pneumatique (14) quand la température actuelle tombe au-dessous de la température cible d'au moins une quantité calibrée (100-102) en désactivant l'embrayage (22) pour arrêter le compresseur (12), et ensuite en activant l'embrayage (22) pour mettre en marche le compresseur (12) quand la température actuelle augmente au-dessus de la température cible (98, 104).

2. Procédé selon la revendication 1, incluant les étapes consistant à :
déterminer une température désirée de l'air refoulé dans l'espace conditionné (80) ; et
déterminer la température cible en se basant sur la température désirée (88-92).

3. Procédé selon la revendication 1, incluant les étapes consistant à :
déterminer une température désirée de l'air refoulé dans l'espace conditionné (80) ; et
réduire la température désirée d'une quantité calibrée pour former la température cible (92).

4. Procédé selon la revendication 1, incluant les étapes consistant à :
déterminer une première température cible en se basant sur une température désirée de l'air refoulé dans l'espace conditionné (88-92) ;
déterminer une seconde température cible en se basant sur une température et sur une humidité relative désirée de l'air dans l'espace conditionné (94) ; et
fixer la température cible pour l'air sortant de l'évaporateur (28) en accord avec la plus faible de la première et de la seconde température cible (96).

5. Procédé selon la revendication 4, incluant l'étape consistant à :
fixer la première température cible à une valeur prédéterminée quand une température de l'air entrant est inférieure à la température cible pour l'air sortant de l'évaporateur (28) d'au moins une quantité calibrée (90).

6. Procédé selon l'une quelconque des revendications 1 à 5, dans lequel le système de conditionnement d'air (10) est un système de commande de climatisation automatique, incluant un algorithme de commande climatique (80) qui développe ladite température de refoulement d'air désirée et un algorithme de commande de température d'air refoulé (86) qui régule la quantité d'air réchauffé par le coeur de chauffage (48) pour satisfaire la température de refoulement d'air désirée.

7. Procédé selon l'une quelconque des revendications 1 à 5, dans lequel le système de conditionnement d'air (10) est un système de conditionnement d'air manuel dans lequel la température de refoulement d'air désirée est un paramètre sélectionné par l'utilisateur, et le système (10) inclut une commande de température d'air refoulé (86) qui régule la quantité d'air réchauffé par le coeur de chauffage (48) pour satisfaire la température de refoulement d'air désirée.
